# EUROPEAN PATENT APPLICATION

(11) **EP 2 474 773 A1**
(43) Date of publication of application: **11.07.2012**
(21) Application number: 12150460.9
(22) Date of filing: 09.01.2012
(51) Int. Cl.: F16L 55/38

(54) **Apparatus for pipeline inspection and method of assembly**

(30) Priority: 10.01.2011 EP 11150533
(71) Applicant: PII Limited, Northumberland NE23 1WW (GB)
(72) Inventor: Fussell, Leon, Cramlington, Northumberland NE23 1WW (GB); Harvey, Raymond, Cramlington, Northumberland NE23 1WW (GB)
(74) Representative: McWilliams, David John

(57) **Abstract**

An in-line inspection tool includes a channel through which pipeline fluid can flow through the tool. A valve member controls the rate of flow through the channel. An electrical linear actuator assembly controls movement of the valve member. The actuator assembly is located in fluid filled chamber. The actuator assembly includes a motor for providing powered operation of the valve member and defines a flow path to allow fluid from the chamber to flow through the motor. The chamber is filled with low viscosity oil.

## Description

The disclosure relates to apparatus for pipeline inspection, more particularly to apparatus for in-line inspection of a pipeline (e.g. an oil or gas pipeline). The disclosure further relates to a method of assembly for a pipeline inspection apparatus.

It is known to use electrical linear actuators in a number of applications, including various high-pressure applications. One such application is as part of a speed control system on a pipeline inspection apparatus, e.g. of the type disclosed in US2010/0212747. In that instance, the electrical linear actuator is immersed in oil, the oil serving to protect the electrical linear actuator from debris and corrosive substances.

However, there are problems with the immersion of electrical linear actuators in oil. For example, the types of brushed DC motor often used in electrical linear actuators have brush current limits, and these can be exceeded if the viscosity of the oil is too high. This can be a particular problem in oil & gas pipelines which pass through low temperature environments; the low temperatures may cause the oil to become can become viscous and ineffective.

Further problems with immersion of an electrical linear actuator in oil are caused by the possibility of pockets of gas being trapped in the system. On decommissioning of the actuator, such gas pockets may expand rapidly and explode, increasing the risk of injury to those operating the electrical linear actuator.

The disclosure overcomes or mitigates one or more of the above-discussed problems, or other disadvantages or problems, associated with known pipeline inspection apparatus.

According to one aspect, the disclosure provides an apparatus for pipeline inspection in the form of an in-line inspection tool comprising a channel through which pipeline fluid can flow through the tool, and a flow control valve assembly having a valve member which is movable between a closed position and an open position for controlling the rate of flow of pipeline fluid through the channel, the tool further comprising an electrical linear actuator assembly for controlling movement of the valve member, wherein the valve assembly includes a fluid-filled chamber and the electrical linear actuator assembly is located in said chamber, wherein the electrical linear actuator assembly includes a motor for providing powered operation of the valve member, and wherein the electrical linear actuator assembly defines a flow path to allow fluid from the chamber to flow through the motor.

According to another aspect, the disclosure also provides a method of assembly of a pipeline inspection apparatus comprising the steps of: providing an in-line inspection tool comprising a channel through which pipeline fluid can flow through the tool, and a flow control valve assembly having a valve member which is movable between a closed position and an open position for controlling the rate of flow of pipeline fluid through the channel; the tool further comprising an electrical linear actuator assembly having a motor for controlling movement of the valve member; the method further comprising the steps of locating the electrical linear actuator assembly in a chamber in the valve assembly, and providing a flow path within the electrical linear actuator assembly for fluid from the chamber to flow through the motor.

According to a further aspect, the disclosure provides an apparatus for pipeline inspection in the form of an in-line inspection tool comprising a channel through which pipeline fluid can flow through the tool, and a flow control valve assembly having a valve member which is movable between a closed position and an open position for controlling the rate of flow of pipeline fluid through the channel, the tool further comprising an electrical linear actuator assembly for controlling movement of the valve member, wherein the valve assembly includes a fluid-filled chamber and the electrical linear actuator assembly is located in said chamber, wherein the electrical linear actuator assembly includes a motor for providing powered operation of the valve member, and wherein the electrical linear actuator assembly is configured to allow fluid from the chamber to be drawn into the motor to evacuate air pockets within the motor.

In exemplary embodiments for any one of the above aspects, the electrical linear actuator assembly includes a flow path configured for allowing fluid from the chamber to be drawn into the motor to evacuate air pockets within the motor.

In exemplary embodiments for any one of the above aspects, the electrical linear actuator assembly includes a motor and gearbox, wherein the assembly is configured so that upon operation of the motor and gearbox, fluid can be drawn into the assembly to evacuate air pockets from within the motor and/or gearbox. In exemplary embodiments, the assembly is configured to permit fluid drawn into the motor or gearbox to re-circulate to said chamber.

In exemplary embodiments for any one of the above aspects, the electrical linear actuator assembly has first and second ends, wherein an inlet is provided at the first end and an outlet is provided at the second end, and the electrical linear actuator assembly defines a flow path for fluid to flow in from the chamber through the inlet and back into the chamber through the outlet.

In exemplary embodiments for any one of the above aspects, the motor comprises a stator body and includes a fluid passageway extending from the exterior of the motor through the stator body. In exemplary embodiments, the motor includes an aperture for receiving a bearing shield, said aperture being configured to allow fluid from the chamber to enter the stator body.

In exemplary embodiments for any one of the above aspects, the electrical linear actuator comprises a gearbox coupled to an output shaft of the motor, wherein the gearbox defines a housing in fluid communication with the motor and has an inlet for permitting fluid from the chamber to enter the gearbox. In exemplary embodiments, the gearbox housing includes an aperture for receiving a bearing shield, said aperture being configured to allow fluid from the chamber to enter the gearbox housing.

In exemplary embodiments for any one of the above aspects, the electrical linear actuator comprises an encoder fitted at one end of the motor, wherein the encoder defines a housing and wherein the encoder is fitted in fluid communication with the motor, to allow fluid from the chamber to flow through the motor and into the encoder housing. In exemplary embodiments, the encoder housing includes an outlet to allow fluid from the motor to pass through the encoder and back into the chamber.

In exemplary embodiments for any one of the above aspects, the motor defines a housing and includes an outlet to re-circulate the fluid from the motor housing into the chamber.

In exemplary embodiments for any one of the above aspects, the chamber is filled with low viscosity oil, for example Nyswitcho 3X transformer oil.

According to a still further aspect, the disclosure provides an apparatus for pipeline inspection in the form of an in-line inspection tool comprising a channel through which pipeline fluid can flow through the tool and a flow control valve assembly having a valve member which is movable between a closed position and an open position for controlling the rate of flow of pipeline fluid through the channel, the tool further comprising an electrical linear actuator assembly for controlling movement of the valve member, wherein the valve assembly includes a fluid filled chamber and the electrical linear actuator assembly is located said chamber, and wherein the chamber is filled with Nyswitcho 3x oil.

In exemplary embodiments, the electrical linear actuator assembly of this still further aspect is of the kind set forth in relation to any of the above aspects and/or their exemplary embodiments.

The accompanying drawings, which are incorporated in and constitute a part of the specification, illustrate one or more embodiments and, together with the description, explain these embodiments. In the drawings:
FIGURE 1 is a schematic cross-sectional view through a flow control valve, showing an electrical linear actuator according to an exemplary embodiment of the disclosure;
FIGURE 2 is a schematic side view of the electrical linear actuator of Figure 1;
FIGURE 3 is a schematic partial view of a motor for use in the embodiment of Figures 1 and 2; and
FIGURE 4 is a schematic partial view of an encoder for use in the embodiment of Figures 1 and 3.

The following description of the exemplary embodiments refers to the accompanying drawings. The same reference numbers in different drawings identify the same or similar elements. The following detailed description does not limit the invention. Instead, the scope of the invention is defined by the appended claims.

Reference throughout the disclosure to "an exemplary embodiment," "an embodiment," or variations thereof means that a particular feature, structure, or characteristic described in connection with an embodiment is included in at least one embodiment of the subject matter disclosed. Thus, the appearance of the phrases "in an exemplary embodiment," "in an embodiment," or variations thereof in various places throughout the disclosure is not necessarily referring to the same embodiment. Further, the particular features, structures or characteristics may be combined in any suitable manner in one or more embodiments.

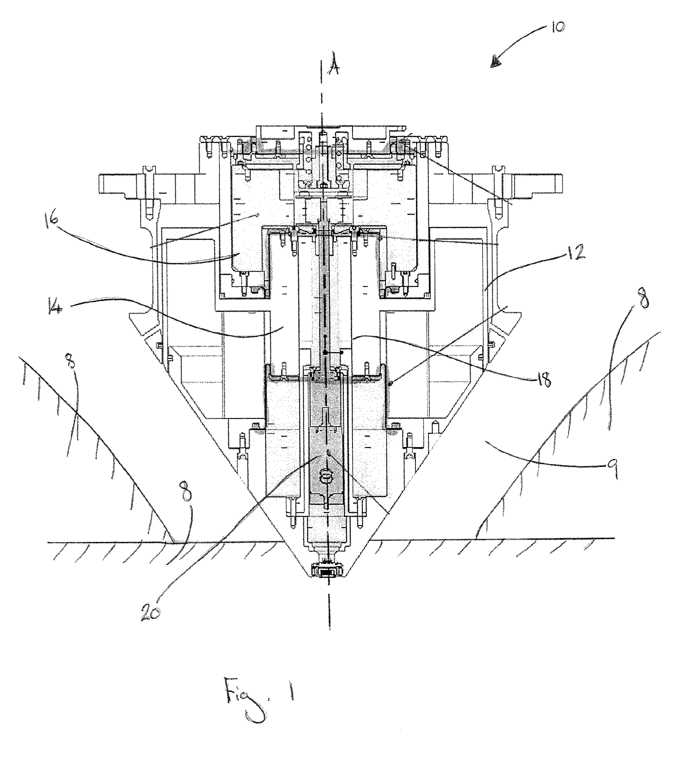

Referring firstly to Figure 1, a pipeline inspection apparatus or "pig" (only part of which is indicated generally at 8) includes a valve assembly 10 for controlling the speed of the apparatus 8 within a pipeline in which the apparatus is travelling. The apparatus 8 defines a channel 9 through which pipeline fluid can flow through the apparatus 8. The valve assembly 10 includes a valve member 12 moveable between an open position and a closed position, thereby controlling the rate of flow of pipeline fluid through the channel 9.

The valve member 12 is attached to a piston 14 having a longitudinal axis A. The piston 14 is contained within a sealed chamber 16. The piston 14 has a central bore 18 into which an electrical linear actuator assembly 20 is inserted. The assembly 20 is contained within the chamber 16 and is connected to the piston 14 such that operation of the assembly 20 moves the piston 14 along axis A within the chamber 16.

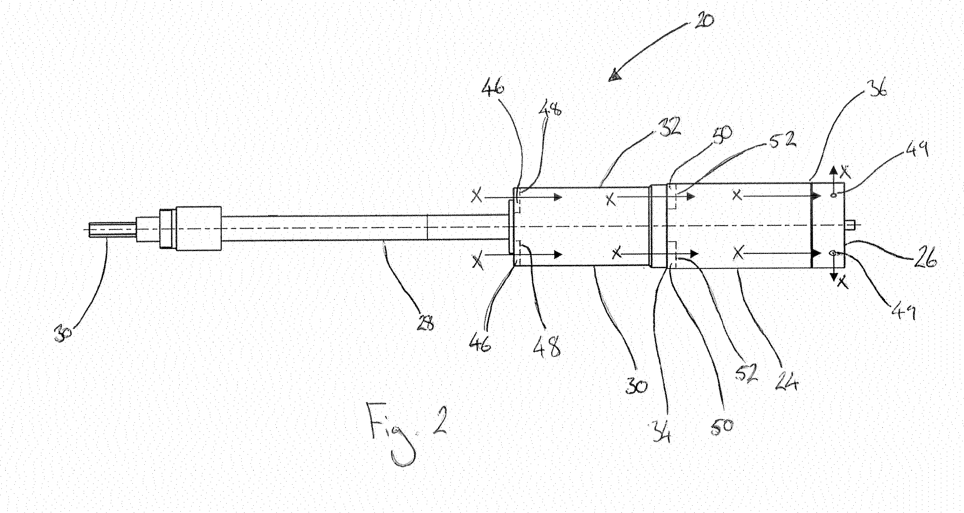

The assembly 20 is shown in more detail in Figure 2. The assembly 20 includes a gearbox 30, a motor 24, an encoder 26 and a spindle 28 arranged along axis A. The assembly 20 defines a fluid flow path through the gearbox 30, motor 24 and encoder 26, indicated in Figure 2 by the arrows X. The flow path allows fluid to flow into the assembly 20, via an inlet 46 (described in further detail below), from the chamber 16 and to return to the chamber 16 through an outlet 49 (described in further detail below).

The spindle 28 has at its end distal a threaded portion 30 to provide the connection between the piston 14 and the assembly 20. Operation of the motor 24 causes rotation of the spindle 28. The gearbox 30 includes a gear train (not shown) which controls the speed at which the spindle 28 is driven by the motor 24.

The gearbox defines a cylindrical housing 31. Bearing shields 46 are removed from the gearbox housing 31, providing an aperture or inlet 48 that puts the gearbox housing 31 in fluid communication with the chamber 16 and allows fluid to pass from the chamber 16 into the gearbox 30.

In this embodiment, the gearbox 30 and spindle 28 are such as those produced under part number 363976 by Maxon Motor UK of Finchampstead, UK.

The motor 24 has a cylindrical motor housing 23 having a first end 34 connected to gearbox housing 31 and a second end 36 connected to the encoder 26. The motor 24 consists of a stator 25 which defines bore in which an armature (not shown) is operable. The connection between the motor housing 23 and the gearbox housing 31 defines a flow path for fluid from the gearbox housing into the motor housing, i.e. into the bore of the stator 25.

The motor 24 is in this exemplary embodiment a brushed DC motor with graphite brushes (not shown) intended to resist corrosion. The graphite brushes have a relatively low current capacity and so have a current limit of 2A. The motor 24 is in this embodiment one such as those produced under part number 323890 by Maxon Motor UK of Finchampstead, UK.

A bearing shield 50 is removed from the motor first end 34, providing an aperture 52 that puts the motor 24 in fluid connection with the chamber 14.

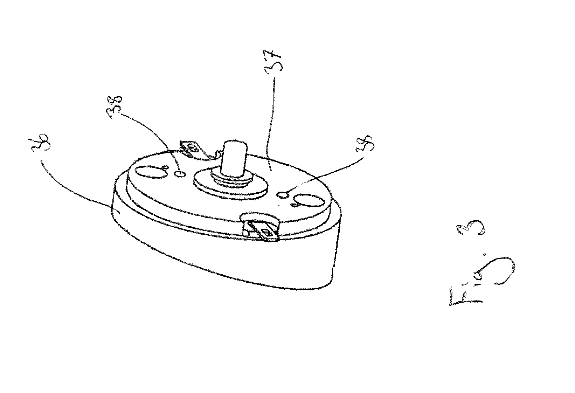

The second end 36 of the motor housing 23 is shown in Figure 3 and defines a disc-shaped end wall 37. The end wall 37 includes two apertures 38 spaced at points approximately half way between the edge and the centre point of the end wall 37. The apertures 38 each define an outlet for the flow of fluid from the motor housing 23, e.g. into the encoder 26.

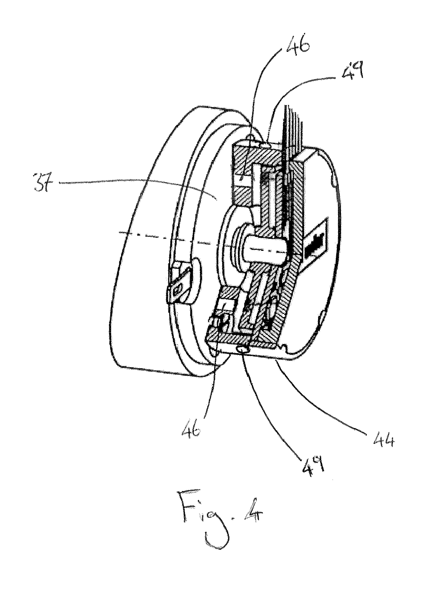

The encoder 26 (shown in Figure 4) is in this exemplary embodiment one such as those produced under part number 228452 by Maxon Motor UK of Finchampstead, UK. The encoder 26 has cylindrical housing 27 having a first end 40, a second end 42 and a side wall 44. The first end 40 comprises two apertures 46 corresponding to and aligned with the apertures 38 of the motor end wall 37. The encoder housing 27 is thereby arranged in fluid communication with the motor 24, allowing fluid to pass from the motor 24 to the encoder 26. The side wall 44 defines two radial apertures 49 connecting with the two apertures 46, putting the encoder housing 27 in fluid communication with the chamber 16 and allowing fluid to pass between the encoder 26 and the chamber 16.

In this exemplary embodiment the apertures 38, 46, 49 may be drilled in the motor 24 and the encoder 26.

Prior to use of the pipeline inspection tool, the chamber 16 and the bore 18 are filled with a low viscosity oil. In exemplary embodiments, the actuator assembly 20 is then primed. Operation of the motor 24 and gearbox 30 acts as a pump, and oil is drawn from the chamber 16 into the assembly 20 through the aperture 48 of the gearbox 30. Oil flows into the gearbox 30, the motor 24 and the encoder 26 via the apertures 50, 38, 46, 49 along the flow path indicated by the arrows X in Figure 2, filling the assembly 20 and thereby eliminating any air pockets within the assembly 20 (e.g. within the gearbox or motor). In use, oil is free to return to the chamber 16 via the apertures 49, e.g. under the pumping action of the motor and gearbox.

Allowing oil to flow through the primed motor 24 ensures that all gas is evacuated from the system, reducing the risk of injury from an explosion of rapidly expanding gas during decommissioning, for example.

In this embodiment, the low viscosity oil used is Nyswitcho 3x oil produced by Nynas of Stockholm, Sweden. Nyswitcho 3x is normally used as switchgear oil. However, test indicate that this particular oil is extremely well suited for use in the harsh operating conditions associated with pipeline inspection. In particular, the oil has been found to perform well at low temperatures, in terms of low viscosity and high oxidation stability.

The low viscosity oil reduces friction in the assembly 20, lowering power consumption and increasing battery life, and thus increasing pipeline inspection range. However, test indicate that the use of Nyswitcho 3x switchgear oil allows the assembly 20 to operate satisfactorily across a wide range of temperatures, e.g. at temperatures from -30°C to 70°C, as well as at pressures up to 220 bar. Test indicate that other low viscosity oils will not perform as well, and may leads to the 2A current limit on the graphite brushes being exceeded, particularly when operating at temperatures below to -10°C. This is due to the increased viscosity of those low viscosity oils at such temperatures, which leads to an increase in the torque level required. When operating the system with Nyswitcho 3x, the 2A current limit on the graphite brushes is not exceeded, as the low viscosity properties of Nyswitcho 3x mean minimal torque is required.

Existing electrical linear actuator assemblies comprising the parts or similar parts described can be easily modified by the removal of bearing shields and the drilling of holes to produce the exemplary embodiment described herein.

In alternative embodiments, alternative low viscosity oils could be used. Alternative DC motors with brushes of a different material could be used. Apertures could be drilled in different areas of the motor and encoder. Further apertures may be provided.

An electrical linear actuator as disclosed may be used for applications, particularly high pressure applications, other than for pipeline inspection.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial difference from the literal languages of the claims.

## Claims

1. Apparatus for pipeline inspection in the form of an in-line inspection tool comprising a channel through which pipeline fluid can flow through the tool, and a flow control valve assembly having a valve member which is movable between a closed position and an open position for controlling the rate of flow of pipeline fluid through the channel, the tool further comprising an electrical linear actuator assembly for controlling movement of the valve member from said closed position to said open position, wherein the valve assembly includes a fluid-filled chamber and the electrical linear actuator assembly is located in said chamber, wherein the electrical linear actuator assembly includes a motor for providing powered operation of the valve member, and wherein the electrical linear actuator assembly defines a flow path to allow fluid from the chamber to flow through the motor.

2. Apparatus according to claim 1 wherein the flow path is configured for allowing fluid from the chamber to be drawn into the motor to evacuate air pockets within the motor.

3. Apparatus according to claim 1 wherein the electrical linear actuator assembly includes a motor and gearbox, and wherein the assembly is configured so that upon operation of the motor and gearbox, fluid can be drawn into the assembly to evacuate air pockets from within the motor and/or gearbox, and wherein the assembly is configured to permit fluid drawn into the motor or gearbox to re-circulate to said chamber.

4. Apparatus according to claim 1 wherein the electrical linear actuator assembly has first and second ends, wherein an inlet is provided at the first end and an outlet is provided at the second end, and the electrical linear actuator assembly defines a flow path for fluid to flow in from the chamber through the inlet and back into the chamber through the outlet.

5. Apparatus according to claim 1 wherein the motor comprises a stator body and includes a fluid passageway extending from the exterior of the motor through the stator body.

6. Apparatus according to claim 5 wherein the motor includes an aperture for receiving a bearing shield, said aperture being configured to allow fluid from the chamber to enter the stator body.

7. Apparatus according to claim 1 wherein the electrical linear actuator comprises a gearbox coupled to an output shaft of the motor, wherein the gearbox defines a housing in fluid communication with the motor and has an inlet for permitting fluid from the chamber to enter the gearbox.

8. Apparatus according to claim 7 wherein the gearbox housing includes an aperture for receiving a bearing shield, said aperture being configured to allow fluid from the chamber to enter the gearbox housing.

9. Apparatus according to claim 1 wherein the electrical linear actuator comprises an encoder fitted at one end of the motor, wherein the encoder defines a housing and wherein the encoder is fitted in fluid communication with the motor, to allow fluid from the chamber to flow through the motor and into the encoder housing.

10. Apparatus according to claim 9 wherein the encoder housing includes an outlet to allow fluid from the motor to pass through the encoder and into the chamber.

11. Apparatus according to claim 1 wherein the motor defines a housing and includes an outlet to re-circulate the fluid from the motor housing into the chamber.

12. Apparatus according to claim 1 wherein the chamber is filled with low viscosity oil.

13. Apparatus according to claim 12 wherein the low viscosity oil is Nyswitcho 3X transformer oil.

14. Method of assembly of a pipeline inspection apparatus comprising the steps of providing an in-line inspection tool comprising a channel through which pipeline fluid can flow through the tool, and a flow control valve assembly having a valve member which is movable between a closed position and an open position for controlling the rate of flow of pipeline fluid through the channel, the tool further comprising an electrical linear actuator assembly having a motor for controlling movement of the valve member from the closed position to the open position, the method including the steps of locating the electrical linear actuator assembly in a chamber in the valve assembly, and providing a flow path within the electrical linear actuator assembly for fluid from the chamber to flow through the motor.

15. Method of assembly according to claim 14 further comprising the step of providing the electrical linear actuator assembly with an inlet at a first end and an outlet at a second end, to define a flow path for fluid to flow in from the chamber through the inlet and back into the chamber through the outlet.

16. Method according to claim 15 wherein the flow path is configured to allow fluid from the chamber to be drawn into the motor to evacuate air pockets within the motor.

17. Method of assembly according to 14 comprising the step of filling the chamber with a low viscosity oil and priming the motor to cause a flow of fluid from the chamber into the motor.

18. Apparatus for pipeline inspection in the form of an in-line inspection tool comprising a channel through which pipeline fluid can flow through the tool, and a flow control valve assembly having a valve member which is movable between an open position and a closed position for controlling the rate of flow of pipeline fluid through the channel, the tool further comprising an electrical linear actuator assembly for controlling movement of the valve member, wherein the valve assembly includes a fluid filled chamber and the electrical linear actuator assembly is located in said chamber, and wherein the chamber is filled with Nyswitcho 3x oil.

19. Apparatus for pipeline inspection in the form of an in-line inspection tool comprising a channel through which pipeline fluid can flow through the tool, and a flow control valve assembly having a valve member which is movable between a closed position and an open position for controlling the rate of flow of pipeline fluid through the channel, the tool further comprising an electrical linear actuator assembly for controlling movement of the valve member, wherein the valve assembly includes a fluid-filled chamber and the electrical linear actuator assembly is located in said chamber, wherein the electrical linear actuator assembly includes a motor for providing powered operation of the valve member, and wherein the electrical linear actuator assembly is configured for allowing fluid from the chamber to be drawn into the motor to evacuate air pockets within the motor.

20. Apparatus according to claim 19 wherein the electrical linear actuator assembly includes a motor and gearbox, and wherein the assembly is configured so that upon operation of the motor and gearbox, fluid can be drawn into the assembly to evacuate air pockets from within the motor and/or gearbox, and wherein the assembly is configured to permit fluid drawn into the motor or gearbox to re-circulate to said chamber.
